# DEMANDE DE BREVET EUROPEEN

(11) **EP 1 707 453 A1**
(43) Date de publication de la demande: **04.10.2006**
(21) Numéro de dépôt: 05290705.2
(22) Date de dépôt: 30.03.2005
(51) Int. Cl.: B60R 22/10, B60N 2/26

(54) **Dispositif de mise en place d'une ceinture de sécurité sur un siège auto pour enfants.**

(71) Demandeur: Mallardeau, Laurent, 85000 La Roche sur Yon (FR)
(72) Inventeur: Mallardeau, Laurent, 85000 La Roche sur Yon (FR)

(57) **Abrégé**

Dispositif qui facilite la mise en place de la ceinture de sécurité sur un siège auto enfants et qui évite aux enfants de se dégager des sangles situées au niveau du torse.

L'invention consiste à placer le long de la ceinture un accessoire semi-rigide, permettant à la ceinture de se positionner correctement lorsqu'elle est débouclée, facilitant ainsi l'accès à la ceinture et à la boucle une fois l'enfant placé. La semi-rigidité de l'accessoire, une fois la ceinture bouclée, évite le dégagement des bras et épaules de l'enfant.

Le dispositif est constitué de l'accessoire semi-rigide (2) monté sur les deux ceintures latérales (1). Cet accessoire se matérialise en deux parties plates souples et articulées (4). Il coulisse le long de la ceinture grâce à des bagues (3) permettant de le maintenir en position ou peut être fixé sur la ceinture. Sous l'assise du siège, l'accessoire est guidé. Le guide (7) permet de positionner la ceinture en forme évasive lorsque la celle-ci est débouclée.

## Description

La présente invention concerne un dispositif qui, d'une part facilite la mise en place d'une ceinture de sécurité sur un siège auto pour enfants et d'autre part, évite aux enfants de se dégager des sangles situées au niveau du torse.

Les ceintures de sécurité et boucles de verrouillages actuellement utilisées sur les sièges auto pour enfants, lorsqu'elles sont décrochées, se positionnent au fond et sur la partie dorsale du siège. Lorsqu'une personne place un enfant sur un siège équipé de ce type de ceinture, il est contraint d'aller chercher les ceintures et boucles sous le postérieur de l'enfant et derrière le dos de ce dernier. Cette action est souvent pénible pour l'opérateur et peu confortable pour l'enfant. D'autre part, une fois la ceinture accrochée, il est fréquent de voir un enfant se dégager des sangles situées au niveau de son torse en passant simplement les bras puis les épaules, entre celles-ci.

Le dispositif selon l'invention, permet de remédier à ces inconvénients. Le procédé consiste à placer le long de la ceinture un accessoire semi-rigide, permettant à la ceinture de se positionner correctement lorsqu'elle est débouclée, facilitant ainsi l'accès à la ceinture et à la boucle une fois l'enfant placé. La semi-rigidité de l'accessoire, une fois la ceinture bouclée, évite le dégagement des bras de l'enfant.

Les dessins annexés illustrent l'invention:
- La figure 1 représente le dispositif monté sur un siège vu de face. La ceinture est débouclée. Son positionnement en forme évasive est obtenu grâce à l'accessoire semi-rigide.
- La figure 2 représente le dispositif après bouclage de la ceinture (sans la boucle).

L'accessoire semi-rigide (2) équipe les deux ceintures latérales (1). Pour chacune d'elles, cet accessoire se constitue de deux parties plates souples et articulées au niveau de la fixation de la boucle (4) permettant un positionnement optimale lorsque la ceinture est bouclée. Cet accessoire peut coulisser le long de la ceinture grâce à des bagues (3) permettant de le maintenir en position. Il peut aussi être fixé sur la ceinture (collé, cousu ...), dans ce cas les bagues ne sont plus utiles par contre des réglages complémentaires de tensions de ceinture peuvent être utiles pour la partie sous abdominale au niveau du repère 5. En général ce système de tension n'est pas prévu sur les sièges actuels. Sur la partie supérieure de la ceinture, l'accessoire se termine au niveau poitrine / clavicule de l'enfant (10). Sur la partie inférieure, il traverse la fente pour ceinture de l'assise du siège (11) et se prolonge le long d'un guide (7). Ce guide permet de part la semi-rigidité de l'ensemble ceinture / accessoire, de positionner le tout en forme évasive, lorsque la ceinture est débouclée.

La ceinture d'entre jambe (9) peut aussi être équipée de l'accessoire (8). Dans ce cas, lorsque la ceinture est débouclée, elle glisse dans son logement (sous le siège) sous l'effet du poids et facilite ainsi la mise en place de l'enfant.

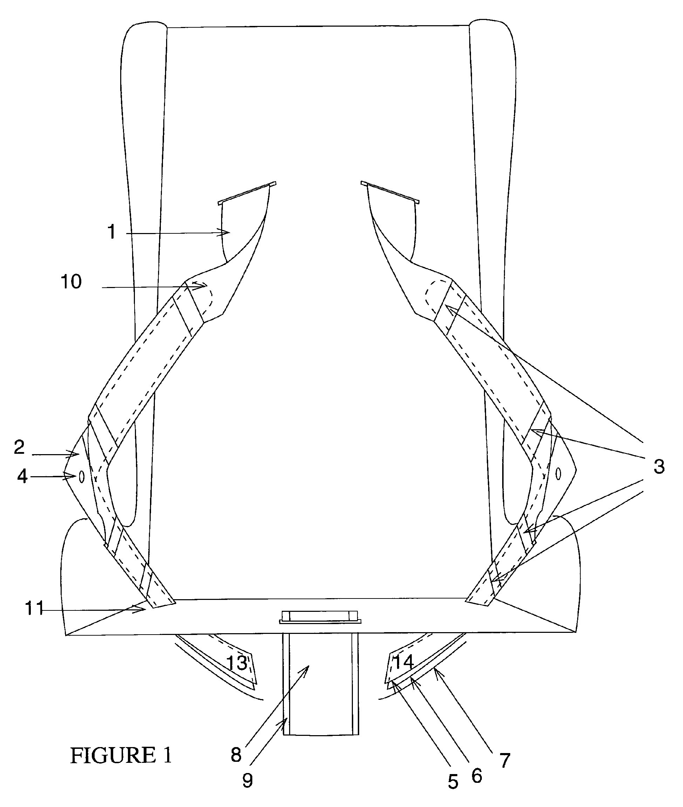

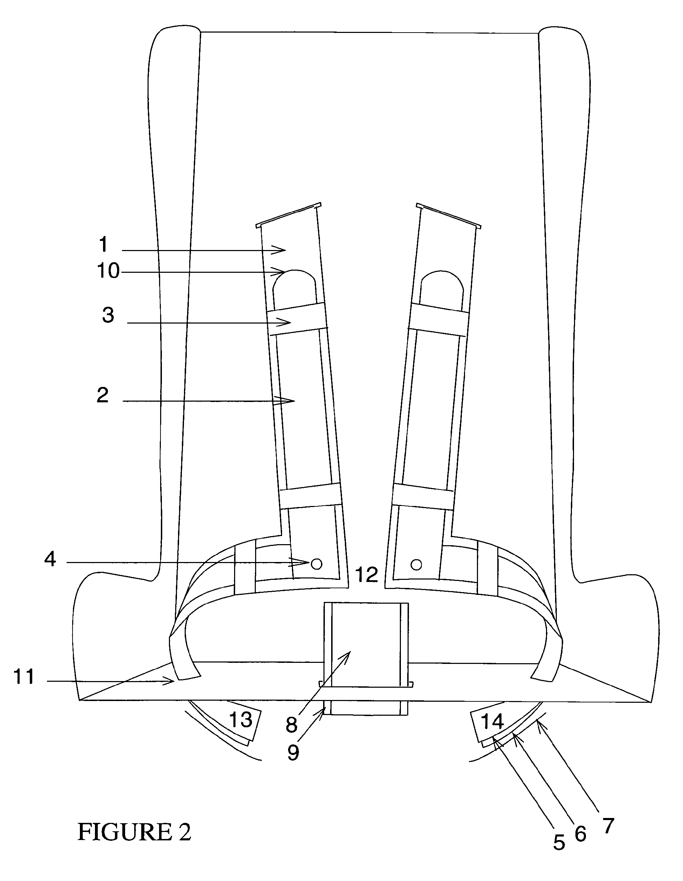

Remarques :
- L'accessoire est placé sur la ceinture et n'est donc pas en contact avec l'enfant.
- La boucle de verrouillage n'est pas représentée sur les figures 1 et 2 car elle de type classique. Cette boucle se fixe sur la sangle (et non sur l'accessoire) et se place au niveau du repère 12, figure 2 en position bouclée.
- Sur les figures 1 et 2, sont représentés le prolongement de la ceinture (5) ainsi que le prolongement de l'accessoire (6) sous l'assise du siège.
- Le système de guide (7) peut être substitué par un système de liaison entre les 2 accessoires semi-rigides sous le siège (ex: liaison par ressort ou lien rigide).
- Le matériau utilisé pour l'accessoire semi-rigide peut être par exemple : un plastic souple aux extrémités arrondies et aux bordures non tranchantes.

## Revendications

1. Dispositif permettant d'une part, le maintien en position ergonomique d'une ceinture de sécurité pour siège auto enfants lorsqu'elle est débouclée et d'autre part, éviter le dégagement des bras et épaules de l'enfant lorsqu'elle est bouclée, **caractérisé par** un accessoire semi-rigide (2) placé le long de la ceinture de sécurité.

2. Dispositif selon la revendication 1 **caractérisé par** un accessoire semi-rigide cousu sur la ceinture.

3. Dispositif selon la revendication 1 **caractérisé par** un accessoire semi-rigide collé sur la ceinture.

4. Dispositif selon la revendication 1 **caractérisé par** un accessoire semi-rigide coulissant le long de la ceinture grâce à des bagues (3).

5. Dispositif selon la revendication 1 **caractérisé par** un accessoire semi-rigide équipé d'une articulation (4).

6. Dispositif selon la revendication 1 **caractérisé par** un accessoire semi-rigide se prolongeant le long d'un guide (7) sous l'assise du siège.

7. Dispositif selon la revendication 1 **caractérisé par** une liaison par ressort des 2 parties de l'accessoire semi-rigide (13 et 14) sous l'assise du siège.

8. Dispositif selon la revendication 1 **caractérisé par** un lien rigide des 2 parties de l'accessoire semi-rigide (13 et 14) sous l'assise du siège.
